# EUROPEAN PATENT SPECIFICATION

(11) **EP 1 352 265 B1**
(45) Date of publication and mention of the grant of the patent: **28.12.2011**
(21) Application number: 01274175.7
(22) Date of filing: 20.11.2001
(51) Int. Cl.: G02B 6/42

(54) **OPTICAL TRANSMITTER, RECEIVER OR TRANSCEIVER MODULE**
OPTISCHER SENDER, EMPFÄNGER- ODER SENDER-/EMPFÄNGERMODUL
EMETTEUR, RECEPTEUR OU MODULE EMETTEUR-RECEPTEUR OPTIQUE

(30) Priority: 26.12.2000 US 749284
(43) Date of publication of application: 15.10.2003
(73) Proprietor: Emcore Corporation, Somerset, NJ 08873-1214 (US)
(72) Inventor: ANDERSON, Gene, R., Albuquerque, NM 87122 (US); ARMENDARIZ, Marcelino, G., Albuquerque, NM 87123 (US); BRYAN, Robert, P., Albuquerque, NM 87111 (US); CARSON, Richard, F., Albuquerque, NM 87123 (US); CHU, Dahwey, Albuquerque, NM 87111 (US); DUCKETT, Edwin, B., III, Albuquerque, NM 87120 (US); MCCORMICK, Frederick, B., Albuquerque, NM 87122 (US); MITCHELL, Robert, T., Albuquerque, NM 87112 (US); PETERSON, David W., Sandia Park, NM 87047 (US); REYSEN, Bill, H., Lafayette, CO 80026 (US)
(74) Representative: Klang, Alexander H.
(86) International application number: PCT/US2001/043281
(87) International publication number: WO 2003/001246

(56) References cited:
- EP-A- 0 889 533
- WO-A-01/27676
- DE-C- 19 714 170
- DE-C1- 19 803 225
- DE-C1- 19 803 225
- JP-A- 5 102 529
- JP-A- 05 102 529
- US-A- 4 225 213
- US-A- 5 359 208
- PATENT ABSTRACTS OF JAPAN vol. 007, no. 078 (P-188), 31 March 1983 (1983-03-31) & JP 58 009110 A (RICOH KK), 19 January 1983 (1983-01-19)
- PATENT ABSTRACTS OF JAPAN vol. 1997, no. 10, 31 October 1997 (1997-10-31) -& JP 09 159882 A (NEC TOHOKU LTD;NEC CORP), 20 June 1997 (1997-06-20)
- PATENT ABSTRACTS OF JAPAN vol. 016, no. 571 (P-1459), 11 December 1992 (1992-12-11) -& JP 04 221912 A (NEC CORP), 12 August 1992 (1992-08-12)
- PATENT ABSTRACTS OF JAPAN vol. 1998, no. 10, 31 August 1998 (1998-08-31) -& JP 10 126002 A (MATSUSHITA ELECTRON CORP), 15 May 1998 (1998-05-15)
- VAN HOVE A. ET AL: 'Direct MT(TM)-compatible connectorisation of VCSEL and LED-arrays to plastic optical fiber ribbon for low cost parallel datalinks' ELECTRONIC COMPONENTS AND TECHNOLOGY CONFERENCE, 1999. 1999 PROCEEDING S. 49TH SAN DIEGO, CA, USA 1-4 JUNE 1999, PISCATAWAY, NJ, USA,IEEE, US LNKD- DOI:10.1109/ECTC.1999.776326 01 June 1999, pages 1096 - 1102, XP010339893 ISBN: 978-0-7803-5231-5
- LAMBKIN J.D. ET AL: 'Development of a vsible VCSEL-to-plastic optical fibre module for use in high-speed optical data links' MATERIALS SCIENCE IN SEMICONDUCTOR PROCESSING & RPOCEEDINGS CONFERENCE MATERIALS, TECHNOLOGIES AND APPLICATIONS PART OF E-MRS SPRING MEETING 3.-4-JUNE 1999, STRABSOURG, FRANCE vol. 3, pages 467 - 473
- COOSEMANS T. ET AL: 'Mt-compatible connectorisation of VCSEL and RCLED arrays to plastic optical fibre ribbons for low cost parallel datalinks' MATERIALS SCIENCE IN SEMICONDUCTOR PROCESSING & RPOCEEDINGS CONFERENCE MATERIALS, TECHNOLOGIES AND APPLICATIONS PART OF E-MRS SPRING MEETING 3.-4-JUNE 1999, STRABSOURG, FRANCE vol. 3, pages 475 - 480
- VAN HOVE A ET AL: "Direct MT(TM)-compatible connectorisation of VCSEL and LED-arrays to plastic optical fiber ribbon for low cost parallel datalinks", ELECTRONIC COMPONENTS AND TECHNOLOGY CONFERENCE, 1999. 1999 PROCEEDING S. 49TH SAN DIEGO, CA, USA 1-4 JUNE 1999, PISCATAWAY, NJ, USA,IEEE, US LNKD- DOI:10.1109/ECTC.1999.776326, 1 June 1999 (1999-06-01), pages 1096-1102, XP010339893, ISBN: 978-0-7803-5231-5
- J.D. LAMBKIN ET AL.: 'Development of a vsible VCSEL-to-plastic optical fibre module for use in high-speed optical data links' MATERIALS SCIENCE IN SEMICONDUCTOR PROCESSING & PROCEEDINGS CONFERENCE MATERIALS, TECHNOLOGIES AND APPLICATIONS PART OF E-MRS SPRING MEETING vol. 3, 03 May 1999 - 04 June 1999, STRASBOURG, FRANCE, pages 467 - 473
- T. COOSEMANS ET AL.: 'Mt-compatible connectorisation of VCSEL and RCLED arrays to plastic optical fibre ribbons for low cost parallel datalinks' MATERIALS SCIENCE IN SEMICONDUCTOR PROCESSING & PROCEEDINGS CONFERENCE MATERIALS, TECHNOLOGIES AND APPLICATIONS PART OF E-MRS SPRING MEETING vol. 3, 03 June 1999 - 04 June 1999, STRASBOURG, FRANCE, pages 475 - 480

## Description

### TECHNICAL FIELD

This invention relates to an optical transmitter, receiver or transceiver module, and more particularly, to an optoelectronic connector.

### BACKGROUND OF THE INVENTION

Fiber optics are one of the most important new media for transmitting information. Fiber optics are capable of carrying enormous quantities of voice, data and video traffic on light impulses over hair-thin glass fibers. Fiber optics transmit more information and data over a shorter period of time than circuit-transmission media. For example, optical signals may be transmitted over fiber optics with losses of less than 0.1 dB/km. In sharp contrast, data generally is transmitted over a pair of twisted copper wires with losses of up to 50 dB/km. The capabilities of fiber optics have fundamentally changed communications.

The fiber optics industry has exploded as the Internet and telecommunication field have created a skyrocketing demand for broadband, high-speed pipe lines to carry data. Long-span fiber optic networks of 100 kilometers or more carry bandwidth ranging from 40 to 50 giga bites per second. Similarly, high-speed fiber optics are capable of connecting wide-area networks of approximately 200 kilometers. Also, fiber optics may connect metropolitan networks of 500 meters to 2 kilometers, such as connecting one building to another building. The largest growth area for high-speed fiber optics, however, is connecting distances of less than 300 meters. In this sub-300 meter or short-distance market, fiber optics are used for a wide variety of purposes, including connecting computers within a room and linking routers, switches and transport equipment.

While significant progress has been made in the area of fiber optics, more widespread use is dependent upon the availability of a low cost, easy-to-use and efficient (i.e., low loss of light) optical transmitter and receiver module to link fiber optics to various electronic devices and components such as computers and routers. A critical aspect of such a module is the accurate alignment and attachment of the individual optical fibers to the electronic devices that transmit and receive light streams to and from the optical fibers. These electronic devices, known as optoelectronic devices, use optical and electronic technology or optoelectronics to convert electrical signals into optical radiation or light and transmit the radiation into optical fibers. Other optoelectronic devices receive optical radiation from optical fibers and convert it into electrical signals for processing. Accurate alignment and attachment of the individual optical fibers to the optoelectronic devices is essential to achieving a good and efficient optical connection, one that produces a low loss of light at the interface between the optical fibers and the optoelectronic devices.

A typical receiver/transmitter modules thereby provide a connection unit to be mounted on a printed circuit board or the like where a fibre ferrule with optical fibres is mounted via spacer part to the coupling surfaces of the respective optoelectronic device array (see e.g. W00127676, JP58009110, Lambkin et al., Materials Science in Semiconductor Processing 3, 467 - 473, 2000, Van Hove et al., Conference on Electronic Components and Technology, 1999, 1096 - 1102, Coosemans et al., Materials Science in Semiconductor Processing 3, 475 - 480, 2000). Providing of a coupling agent like an optically clear adhesive or gel is thereby standard. Also known in this context is the encapsulation of the coupling arrangement with a further adhesive, possibly surrounded by a filling dam, for protection and mechanical support (JP05102529, DE19714170, EP0889533) known method for precisely coupling optical fibers to optoelectronic devices is active alignment. Specifically, a photo-detector is placed at one end of an optical fiber, and an optoelectronic device, such as a vertical cavity surface emitting laser, is placed near the other end of the optical fiber. After turning on the laser, the optical fiber is manipulated manually around the light-emitting surface of the laser until the photo-detector detects the maximum amount of optical radiation as indicated by an output electrical signal. Similarly, a photo-detector can be actively coupled to an optical fiber by transmitting laser light into one end of an optical fiber and manually adjusting the position of the other end of the optical fiber relative to the photo-detector until the detector receives the maximum amount of optical radiation.

Actively aligning an array of optical fibers to an array of optoelectronic devices is not practical because the dimensions of an optoelectronic device and the cross-section of an optical fiber are small and multiple dimensions of rotation and translation motion must be controlled. The active alignment process to connect even a single optical fiber strand to an optoelectronic device is usually time-consuming and requires knowledge, skill and expertise. The active alignment process is particularly laborious and time-intensive when a number of optical fibers must be individually aligned to an array of optoelectronic devices. This process requires a variety of relatively complex and costly components that significantly increase the fabrication costs to produce precisely aligned optical devices. Moreover, during the active alignment process, optoelectronic devices emit a significant amount of optical power and energy. The heat generated by the devices can produce thermal strain that may cause the optical fibers and the optoelectronic devices to be misaligned.

Various passive alignment techniques have been developed, such as the use of guide pins and holes, to attempt to provide fast, easy and simultaneous alignment and attachment of an array of optical fibers to optoelectronic devices. Passive alignment typically indicates a technique for aligning a laser and an optical fiber that does not require the laser to be turned on during the alignment process; whereas an "active" technique requires the laser to be turned on. However, these passive alignment techniques often do not provide a precision coupling of the optical fibers to optoelectronic devices.

Accordingly, there is a need in the art to provide a method and apparatus for precise, fast and easy alignment and attachment of optical fibers to optoelectronic devices, which may be mounted on a circuit board. In addition, there is a need in the art to provide an inexpensive method and apparatus for aligning and attaching optical fibers to optoelectronic devices so that the method and apparatus are suitable for mass production. Finally, there is a need in the art for a small apparatus coupling optical fibers to optoelectronic devices so that the apparatus can easily be mounted on a circuit board.

### SUMMARY OF THE INVENTION

In view of the above-stated disadvantages of the prior art, it is an object of the present invention to provide a connector according to claim 1 and process for quickly, easily and precisely aligning and connecting at least one optical fiber to at least one optoelectronic device by using highly precise machinery and adhesive.

It is further an object of the present invention to provide a connector according to claim 1 and process for aligning and connecting at least one optical fiber to at least one optoelectronic device while maintaining a gap between at least one optical fiber and at least one optoelectronic device.

### BRIEF DESCRIPTION OF THE DRAWINGS

The accompanying drawings, which are incorporated in and constitute a part of the specification, illustrate embodiments of the invention, and together with the general description given above and the detailed description of the embodiments given below, serve to explain the principles of the invention.
**FIG. 1** is perspective view of an embodiment of the invention.
**FIG. 2** shows a perspective view of an embodiment of the invention mounted on the edge of a circuit board.
**FIGS. 3** is a diagrams of cut-away-side views of the flexible printed circuit board, according to an embodiment of the invention.
**FIG. 4** is side-view showing an alternative embodiment of a first ferrule and the head region of the flexible printed circuit board, according to an embodiment of the invention.
**FIG. 5** is an exploded view of an embodiment of the housing, an embodiment of the first ferrule, an embodiment of a circuit board mounting structure and an embodiment of the flexible printed circuit board, according to an embodiment of the invention.
**FIG. 6** is a three-dimensional view of an embodiment of the housing, according to an embodiment of the invention.
**FIGS. 7a-7b** are diagrams of an embodiment of an apparatus for holding an optical element, according to an embodiment of the invention.
**FIGS 8a-8d** show views of images of optoelectronic devices and images of optical fiber under the high magnification of a split-field microscope.
**FIG. 9** shows the display on a monitor of a video image measuring system.

### DETAILED DESCRIPTION OF PREFERRED EMBODIMENTS

### I. Introduction

The following embodiments will be described in the context of an optical transceiver, receiver or transceiver module and a method of making the same. If the same reference numeral is repeated with respect to different figures, it refers to the corresponding structure in each figure.

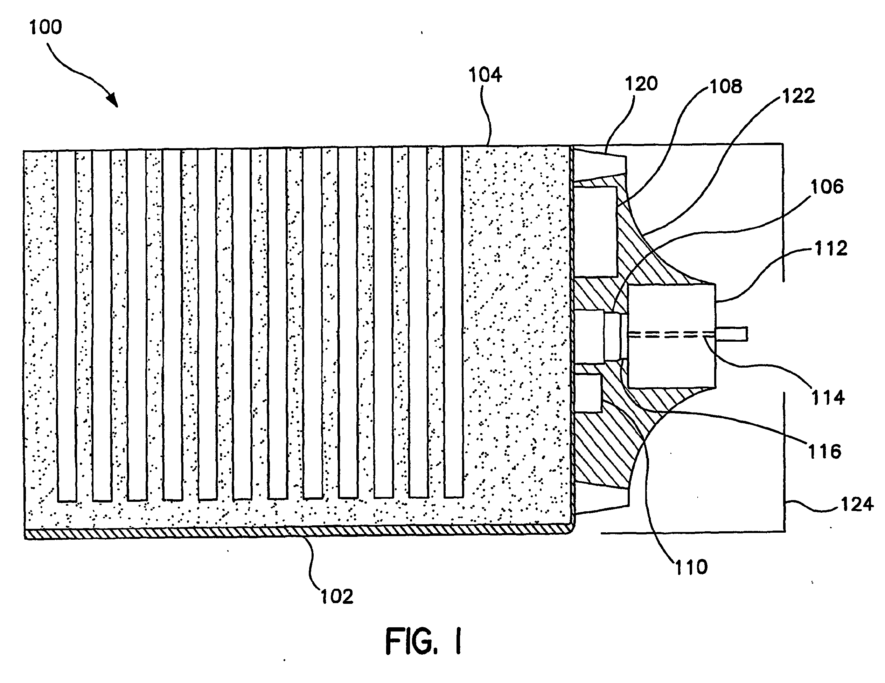

With reference to **FIG. 1****,** an optical transmitter, receiver or transceiver module **100** is depicted, according to an embodiment of the invention. The optical module **100** comprises a flexible printed circuit board **102** that wraps around and attaches to a circuit board mounting structure **104.** The flexible printed circuit board **102** functions to support the electrical components of the optical module **100,** such as an array of optoelectronic devices **106,** a driver or amplifier chip **108,** and a photo-detector **110.** A first ferrule **112,** packaging an array of optical fibers **114,** is mounted on top of the array of optoelectronic devices **106** in such a manner that one or more of the optical fibers in the array is optically aligned to one or more of the optoelectronic devices.

Prior to mounting the first ferrule **112** on the array of optoelectronic devices **106,** a first adhesive **116** is dispensed on a top surface of the array of optoelectronic devices **106.** The first adhesive **116** functions to maintain the precise axial alignment between the array of optical fibers **114** and array of optoelectronic devices **106.** The first adhesive **116** also functions to produce a high, optical coupling efficiency between the optical fibers **114** and optoelectronic devices **106.** Additionally, the first adhesive **116** functions to mechanically stabilize the first ferrule **112** to the optoelectronic devices **106.**

To further mechanically stabilize the first ferrule **112** to the flexible printed circuit board **102,** a dam **120** may be formed on the flexible printed circuit board **102** and filled with a second adhesive **122.** An housing **124** is attached to the circuit board mounting structure **104,** surrounding and enclosing the first ferrule **112** that is connected to the flexible printed circuit board **102.**

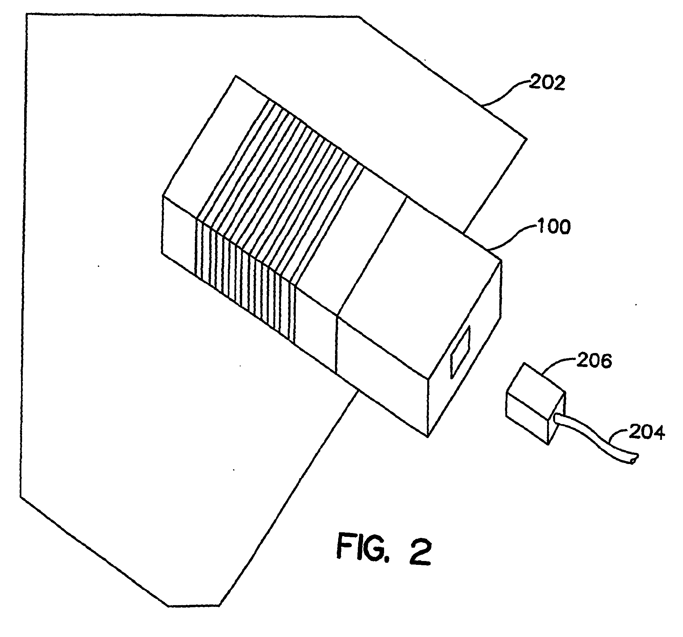

In an illustrative embodiment, an optical transmitter or receiver module **100** is mounted on a second circuit board **202,** as depicted in **FIG. 2****.** The optical module, however, does not have to be mounted at the board's edge. The optical module may be mounted anywhere on the circuit board so long as there is room for connecting the optical module to the external environment. In operation, the optical module **100** is connected to the external environment by connecting a fiber optic cable **204** to the optical module **100.** This is accomplished by plugging a second ferrule **206** that is attached to one end of a fiber optic cable **204** into the optical module **100.** Once the second ferrule **206** is plugged into the optical module **100,** the module **100** is optically connected to the fiber optic cable **204.** Accordingly, if the optical module **100** functions as a transmitter, the optical module **100** receives electrical signals from the second circuit board **202,** converts the electrical signals into optical signals, and transmits the optical signals into the fiber optic cable **204.** On the other hand, if the optical module **100** functions as a receiver, the optical module **100** receives optical signals from the fiber optic cable **204,** converts the optical signals into electrical signals and transmits the electrical signals to the second circuit board **202.**

### II. Flexible Printed Circuit Board

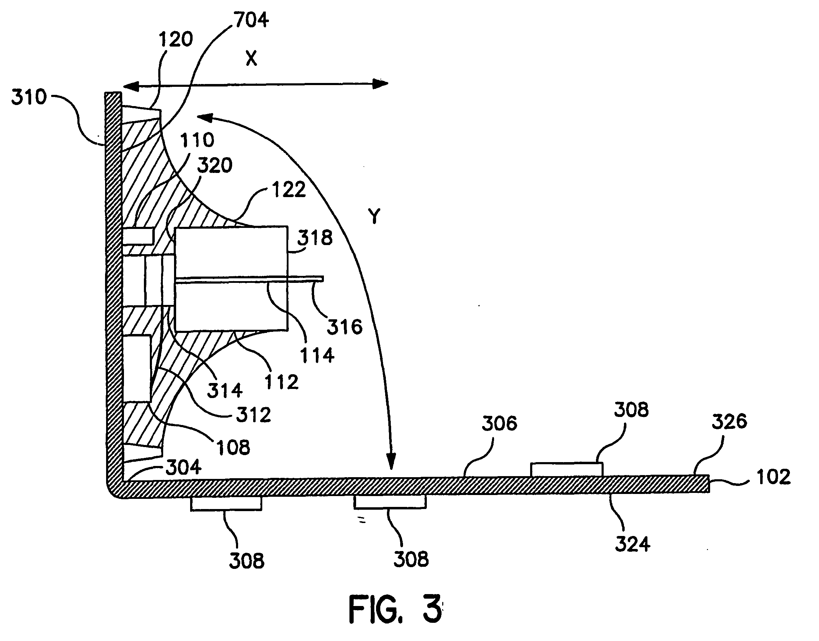

The flexible printed circuit board **102** is now described in further detail. Specifically, **FIG. 3** is a cut-away-side view of an embodiment of the flexible printed circuit board **102.** The flexible printed circuit board may be bent or folded in any direction. The flexible printed circuit board **102** is thin, rectangular and flexible with various edge contours, and it is composed of flexible metal layers that are sandwiched between insulating layers. The entire flexible printed circuit board may be composed of this multi-layered structure. In addition to supporting the electrical components and circuitry of the optical module **100,** the flexible printed circuit board **102** also provides stress relief when connecting the optical module **100** to an external source and aids in maintaining the precise alignment of the optoelectronic devices **106** with an the optical fibers **114.**

The flexible printed circuit board **102** is bent in the "Y" direction to form a head region **302,** a buckle region **304** and a main body region **306.** The head region **302** may function to support the key electrical components and other elements of the optical module **100,** such as the optoelectronic devices **106** and driver or amplifier chip **108.** The main body region houses a plurality of electronic components **308** and a plurality of electronic circuitry of the optical module **100.** The buckle region **304** is that area of the flexible printed circuit board **102** that connects the head region **302** to the main body region **306.**

Each region of the flexible printed circuit board is described in detail below.

### A. Head Region

The head region **302** of the flexible printed circuit board **102** is now described in detail, and it is shown in **FIG. 3** The head region **302** is composed of the same multi-layered structure as the other regions of the flexible printed circuit board **102.** The head region **302** is orientated in the "Y" direction, and the head region **302** may be on a plane that is substantially perpendicular to the main body region **306** of the flexible printed circuit board **102,** as shown in **FIG. 3**

The head region **302** is orientated in the "Y" direction so that the optical fibers **114** packaged in the first ferrule **112** are optically aligned with the optical fibers **114** packaged in the second ferrule **206.** As shown in **FIG. 3** the head region **302** of the flexible printed circuit board **102** may function to support the key electrical components of the optical module **100** such as the driver or amplifier chip **108.**

The flexible printed circuit board performs the function of changing the plane on which the signals are received. Specifically, the signals are received by the flexible printed circuit board in the "X" direction from the first ferrule **112** that is optically connected to the optoelectronic devices **106,** which are adapted to the head region **302** of the flexible printed circuit board **102.** The signals then flow in substantially the "Y" direction in the head region **302** of the flexible printed circuit board **102.** The signals then change planes, as they pass from the head region **302** through the buckle region **304** and to the main body region **306** of the flexible printed circuit board **102,** as shown in **FIG. 3**. The signals flow in the "X" direction in the main body region. Advantageously, by changing the plane on which the signals travel, the flexible printed circuit board functions to efficiently communicate with both the fiber optical cable attached to the optical module and an external circuit board upon which the optical module is mounted.

### 1. Optoelectronic Devices

One board-level component of the head region **302** may be the array of optoelectronic devices **106.** The array of optoelectronic devices **106** may be adapted approximately in the center of a first surface **310** and/or the second surface **704** of the head region **302,** as shown in F**IG. 3** The array of optoelectronic devices **106** may be a one-dimensional, two-dimensional or a multi-dimensional array of optoelectronic devices **106.**

The array of optoelectronic devices **106** may be various types of devices such as edge-emitting lasers, light-emitting diodes ("LEDs"), vertical cavity surface emitting lasers (VCSELs), other surface emitting devices or photo-detectors. The optoelectronic devices **106** may also be integrated devices combining one or more devices such as the combination of VCSELs and transistors or photo-detectors and transistors (or VCSELs, photo-detectors and transistors). The optoelectronic devices **106** may also be a heterogeneous array where some of the array elements are emitters and some are detectors.

If the optoelectronic devices **106** are VCSELs, the optical module **100** functions as a transmitter, sending optical signals into the array of optical fibers **114** that are packaged in the ferrule.

If the optoelectronic devices **106** are photo-detectors formed on a semiconductor chip, the optical module **100** functions as a receiver for receiving optical signals from the array of optical fibers **114** packaged in the first ferrule **112.**

In an embodiment, the optoelectronic devices **106** are oxide-confined VCSELs. Advantageously, oxide-confined VCSELs operate at higher speeds and have lower threshold currents than non-oxide VCSELs, such as ion-implant VCSELs. Additionally, oxide-confined VCSELs are stable VCSELs, exhibiting uniform power and wavelength performance over varying temperature ranges. This advantageously would allow the module to perform for longer a duration and high degree of accuracy. Moreover, it is contemplated that use of oxide VCSELs would obviate the need for a feedback loop, as hereafter described. Moreover, oxide-confined VCSELs allow the fabrication of highly uniform arrays, enabling multi-channel, parallel optic applications.

Lastly in another embodiment, a micro-electromechanical system ("MEMS") array, a micro-pipette array or a biological or chemical sample held on a substrate may be used in place of the array of optoelectronic devices **106.**

### 2. Driver or Amplifier Chip

Another board-level component of the head region **302** of the flexible printed circuit board **102** may be the driver or amplifier chip **108,** as shown in **FIG. 3** . Specifically, a driver or amplifier chip **108** may be adapted next to the array of optoelectronic devices **106** on the first surface **310** and or the second surface **704** of the head region **302** of the flexible printed circuit board **102,** as shown in **FIG. 3a** or **FIG. 3****b.** In another embodiment, the driver or amplifier chip **108** may be adapted to the main body region of the flexible printed circuit board.

Where the optoelectronic devices **106** are VCSELs, a driver chip is used, and it functions to drive and modulate the VCSELs. Where the optoelectronic devices **106** are photo-detectors, then an amplifier chip is used, and it amplifies the electronic signals received from photo-detectors. Wire bonds **312** or any other suitable means such as plating, welding, tape-automated bonding or the use of flip-chip technology may be used to connect the driver or amplifier chip **108** to the optoelectronic devices **106,** as shown in **FIG. 3**. The driver or amplifier chip **108** may be monolithically formed on a semiconductor chip or integrated with the array of optoelectronic devices **106** as a hybrid circuit.

### 3. Spacer

An additional board-level component of the head region **302** of the flexible printed circuit board **102** is a spacer **314**, as shown in **FIG. 3**. The spacer **314** may be shaped like a square and may be composed of silicon material. A bottom surface of the spacer **314** may be adapted approximately in the center of the head region **302**, as shown in **FIG. 3**. The spacer also may function as a mounting surface for other components such as the first ferrule **112**.

According to the invention a small interstitial space or gap is maintained between the second end of the first ferrule 320 and the top surface of the optoelectronic devices **102**.

The spacer **314** functions to create or form a gap between the array of optoelectronic devices **106** and the array of optical fibers. Specifically, the spacer **314** is adjacent to the array of optoelectronic devices. The top surface of the spacer **314** is higher than the surface of the array of optoelectronic devices **106**. The top surface of the spacer is in contact with the second end of the first ferrule **320**. Accordingly, this creates or forms a gap between the optoelectronic devices and array of optical fibers packaged in the first ferrule.

### 4. Ferrule

The optical module **100** may include the first ferrule **112,** as shown in **FIG. 3** The first ferrule is mounted on the head region **302** of the flexible printed circuit board **102.** More specifically, the second end of the first ferrule **320** is mounted on the top surface of the array of optoelectronic devices **106.** The first ferrule **112** is precisely aligned and attached directly above the active region of the array of optoelectronic devices **106** so that a high coupling efficiency (low loss of light) is achieved. In other words, each optical fiber **114** in the first ferrule **112** is accurately aligned to a corresponding individual optoelectronic device **106** so that the array of optical fibers **114** inside the first ferrule **112** is optically aligned with the array of optoelectronic devices **106.** The precise alignment and attachment of the first ferrule **112** to the array of optoelectronic devices **106** is accomplished by using highly precise machinery and adhesive, and this novel process is explained below.

The first ferrule **112** may comprise a rectangular ferrule. The first ferrule **112** packages an array of optical fibers **114,** extending from a first end **318** of the first ferrule **112** to a second end **320** of the first ferrule **112.** Two alignment pins **316** may be adapted to the first end **318** of the first ferrule **112.** The alignment pins function to mate the first ferrule **112** to a second ferrule **206.** Alternatively, two alignment pin holes may be adapted to the first end **318** of the first ferrule **112** in place of the two alignment pins **318.** The alignment pin holes function to mate the first ferrule **112** to a second ferrule **206.**

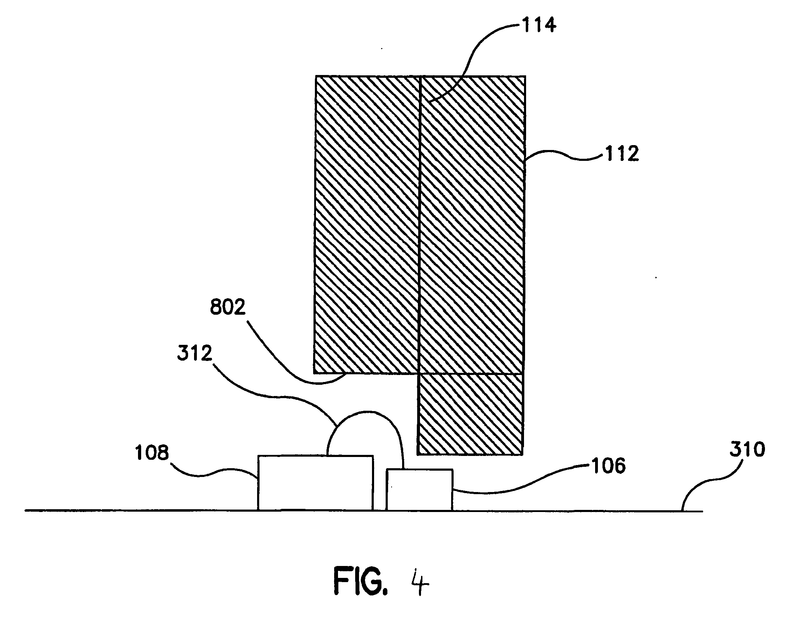

**FIG. 4** is a side-view showing an alternative embodiment of the first ferrule **112** and the head region **302** of the flexible printed circuit board **102,** according to an embodiment of the invention. Costs are reduced by using a smaller optoelectronic device **106,** as shown in **FIG. 4**. A notch **802** exists at the second end of the first ferrule **320** so that there is sufficient room for wire bonding between the optoelectronic devices **106** and driver or amplifier chip **108.** Advantageously, the notch **802** allows positioning the driver chip or amplifier chip **108** in close proximity to the smaller optoelectronic devices **106.** Therefore, the notch **802** obviates the need for long wire bonds to connect the optoelectronic devices to the driver or amplifier chip.

In another embodiment, an array of optical elements may be used in place of the array of optical fibers **114.** The optical element may comprise a lenslet array, diffractive optic array, a lens, filter, pipette, capillary tube or optical fibers. The optical element array may be a one-dimensional, two-dimensional or multi-dimensional array of optical elements.

In contrast to a single optical element or fiber, an array of optical elements or fibers introduces engineering, design, assembly and packaging complexity. This complexity was taken into account in embodiments of the invention. For example, an array of optical elements generates more heat and electromagnetic interference that a single optical element, and this must be considered in all aspects of making and using the device. Also, unlike aligning a single optical element to an optoelectronic device, aligning an array of optical elements to an array of optoelectronic devices is considerably more difficult and complex. Moreover, an array of optical elements can more readily become effected by electrical or optical cross-talk since the optical elements are closely coupled. Therefore, the array is highly subject to signal degradation, and design limitations must be made to take these factors into account. Additionally, working with an array rather than a single optical fiber requires developing new tools and techniques for various manufacturing aspects such as precision alignment and eye-safety. Such tools and techniques were developed specifically for embodiments of this invention. In summary, for these and other reasons, an array of optical elements introduces engineering, design, assembly and packaging complexity that is simply not present with a signal optical element, and this added complexity was taken into account in embodiments of the invention.

### 5. First Adhesive

Prior to mounting the first ferrule **112** on top of the array of optoelectronic devices **106,** a first adhesive **116** is dispensed on the top surface of the array of optoelectronic devices **106,** as shown in **FIG.** 3. The first adhesive is preferably an optically clear adhesive that has a complementary index of refraction to the optical fibers **114.**

The first ferrule **112** is held suspended above the top surface of the array of optoelectronic devices **106** in the first adhesive **116.** The optical adhesive **116** may be cured with UV light, RF radiation, air, microwave radiation or thermal means, depending on the type of adhesive that is used. Once the optical adhesive **116** is cured, the space or gap between the second end of the first ferrule **320** and the top surface of the optoelectronic devices **118** is preserved or set; this space having been filled with the first adhesive **116.** In other words, a thin layer of first adhesive **116** exists at the interface between the second end of the first ferrule **320** and the top surface of the optoelectronic devices **118.**

The first adhesive **116** functions to stabilize and hold the first ferrule **112** to the array of optoelectronic devices **106.** The first adhesive **116** maintains the precise alignment of the array of optical fibers **114** packaged in the first ferrule **112** to the array of optoelectronic devices **106.** The first adhesive also functions to maintain the gap that exists between the first ferrule **112** and array of optoelectronic devices 106.

Advantageously, the first adhesive **116** produces a high coupling efficiency between the array of optical fibers **114** packaged in the first ferrule **112** and the array of optoelectronic devices **106.** Specifically, the first adhesive **116** is an optically clear adhesive and has almost the same refractive index as the optical fibers. Accordingly, by providing a refractive index match to the optical fibers, light passing from the array of optoelectronic devices **106** to the array of first fibers **114** (or vice versa) experiences minimal Fresnel reflection loss and optical divergence over the gap distance that exists between the array of optoelectronic devices **106** and the array of first fibers **114.** This produces a high-coupling efficiency at the interface between the top surface of the optoelectronic devices **106** and the optical fibers **114.** The first adhesive **116** also serves to prevent air from existing at the interface or space between the first ferrule **112** and the array of optoelectronic devices **106.** The elimination of air at the interface or gap is desirable because air has a lower refractive index than the optoelectronic devices **106,** the optical fibers **114** and the first adhesive **116.** The refractive index difference introduces reflection losses, and the lower reflective index results in greater beam divergence per unit propagation length. If air were present, light passing from the optoelectronic devices **106** to the optical fibers **114** (or vice versa) may experience greater divergence, thereby reducing the efficiency of the coupling. Furthermore, the first adhesive prevents a second adhesive **122** from inadvertently seeping or wicking into the gap or space between the bottom surface of the ferrule and the top surface of the optoelectronic devices. Consequently, the first adhesive **116** advantageously produces a high-coupling efficiency between the optoelectronic devices **106** and the optical fibers **114** that are packaged in the first ferrule **112.**

The first adhesive **116** not only enhances the coupling efficiency between the optical fibers **114** and optoelectronic devices **106** by providing a refractive index match to the optical radiation, but it also serves another important purpose. Specifically, the first adhesive **116** provides mechanical robustness by securing the first ferrule **112** to the array of optoelectronic devices **106.** As previously stated, the gap or space between the bottom surface of the first ferrule **112** and the top surface of the optoelectronic devices **118** is filled with the first adhesive. The first adhesive functions to mechanically stabilize the first ferrule **112** to the head region 302 of the flexible printed circuit board **102.** The first adhesive **116** provides support for any lateral, axial or rotational strain that may be created when a fiber optic cable is attached to the optical module. Furthermore, this allows proceeding to the dam and well-fill step, which is explained below, with minimal or no supporting structure to maintain the precision axial alignment of the array of optical fibers **114** packaged in the first ferrule **112** to the array of optoelectronic devices **106.** Accordingly, the first adhesive **116** advantageously reduces manufacturing time and costs by providing mechanical robustness in addition to providing high coupling efficiency.

### 6. Second Adhesive and Dam

As previously stated, the first adhesive mechanically stabilizes the first ferrule **112** to the head region 302 of the flexible printed circuit board **102.** A second adhesive **122** is adapted to the head region **302** to further mechanically stabilizes the first ferrule **112** to the head region **302** of the flexible printed circuit board **102,** as shown in **FIG. 3**. Similar to the first adhesive **116,** the second adhesive **122** may provide support for any lateral, axial or rotational strain that may be created when a fiber optic cable is attached to the optical module. No dam is necessary to form the first adhesive **116.**

To further mechanically stabilize the first ferrule **112** to the head region, a dam **120** is formed on the head region **302** and filled with the second adhesive **122,** as shown in FIG. 3 . The dam may be constructed or dispensed, and the dam **120** may be dispensed and formed in a single or multi-layered path. The dam **120** may be in the shape of a square, diamond, oval or any other shape that effectively stabilizes and encloses the optoelectronic devices and possibly wire bonds and other die on the head region **302** of the flexible printed circuit board **102.** The dam **120** furthermore surrounds and encloses all of the components on the head region **302** for extra protection. The dam **120** is constructed and formed on the first surface **310** of the head region **302** of the flexible printed circuit board **102.**

The dam **120** surrounds the first ferrule **112,** driver or amplifier chip **108** or other electrical components, as shown in **FIG. 3**. The dam **120** may be composed of adhesive or epoxy. The dam **120** may be formed or built by dispensing several layers of adhesive or epoxy on top of each other over time until the desired height and width of the dam **120** is achieved. The adhesive or epoxy may be any standard well-fill or potting epoxy. Alternatively, as previously stated, the dam may be dispensed and formed in a single path.

The area within the dam is filled with the second adhesive **122.** The second adhesive **122** preferably covers the driver or amplifier chip **108,** array of optoelectronic devices **106,** and any other electrical components that are adapted to the head region **302,** as shown in **FIG. 3**. A sufficient amount of second adhesive **122** is poured inside the dam area so that the height of the second adhesive **122** may span from the first surface **310** of the head region **302** of the flexible printed circuit board 102 to somewhere below the first end **318** of the first ferrule **112,** as shown in **FIG. 3**. After the second adhesive **122** has been cured, the dam **120** and second adhesive **122** function to mechanically stabilize the first ferrule **112** to the first surface **310** of the head region **302** of the flexible printed circuit board **102.**

Advantageously, the dam **120** and second adhesive **122** may provide additional mechanical support to further stabilize the first ferrule **112** to the head region **302** of the flexible printed circuit board **102.** The dam **120** and second adhesive **122** may function to absorb stress and provide rigidity and strength that may be needed when connecting the optical module to an external environment such as a fiber optic cable. Also, the dam **120** and second adhesive **122** may prevent movement that may occur over temperature variances. Moreover, the dam **120** and second adhesive **122** may function to provide moisture blocking and protection to the electrical components and circuitry adapted to the first surface **310** of the head region **302** of the flexible printed circuit board **102.**

### 7. Third Layer

For airtight sealing of the optical module, the surface area of the second adhesive **122** may be covered with a third layer. The third layer may protect the optical module by blocking the permeation of moisture and providing electric shielding. The third layer may be a conductive and or moisture blocking adhesive such as gel silicon resin. It may also be a metallic, dielectric or other type of coating that provides necessary protection to the optical module.

### 8. Attenuator or Conditioner

In an embodiment of the invention, an attenuator may be used that functions to modify the performance of the array of optoelectronic devices. Specifically, superior performance of the array of optoelectronic devices typically is found if such devices are operated at the mid-point rather than low-point of their power range. However, operating the optoelectronic devices at the mid-point of their power range may not meet optical output requirements. One solution is to operate the optoelectronic devices at the mid-point of their power range but not transmit all of the power out of the end of the array of optical fibers. This may be accomplished through the use of the attenuator. The attenuator may function to reflect, absorb and or scatter the optical output of at least one optoelectronic device. Also, the attenuator advantageously may control optical cross-talk, reduce back-reflection and may eliminate feedback noise.

One embodiment of the attenuator may be a coating on the first or second end of the first ferrule or a coating on the first or second end of the array of optical elements that are packaged in the ferrule. It also may comprise a coating on the first end of the array of optoelectronic devices. The coating may be a metal, dialetric, organic or other material, and the coating may be patterned. In this embodiment, the attenuator would function to absorb some of the light emitted by the optoelectronic devices. Other embodiments of the attenuator may be increasing the absorption of the first adhesive, introducing a controlled seeping or wicking of an absorbing second adhesive, changing the gap distance to reduce coupling, changing the refractive index to introduce Fresnel reflection and introduce divergence, changing the lateral alignment, or changing the surface finish of the optical fibers. Finally, other embodiments of the attenuator may include changing the optical transmission characteristics of the array of optical fibers so that they absorb, reflect and or scatter light. In this manner, the optical energy exiting the array of optical fibers will have its signal power reduced. This may be accomplished by changing the surface finish of the cores of the optical fibers (e.g., using frosted, wavy or rough surface glass) or by coating the inner surfaces of the fiber optic cores.

Finally, in another embodiment of the invention, a conditioner may be used to improve the performance of the array of optical fibers by changing the way the optical energy is launched into the optical fibers. For example, conditioning the launch of optical energy can improve the effective bandwidth of the optical fibers. The conditioner may function to change the phase distribution of the optical energy that is emitted by the optoelectronic devices.

Conditioning the launch of the optical energy flowing into the optical fibers from the optoelectronic devices may be accomplished as follows: patterning a coating on the first end of the array of optoelectronic devices; patterning a coating on the first or second end of the array of optical fibers; adapting a diffractive object on the input or output of the array of optical fibers so as to change the structure of the optical energy; changing the lateral position of the array of optoelectronic devices relative to the array of optical fibers; changing the optical transmission characteristics of the array of optical fibers; tilting the array of optoelectronic devices relative to an optical path; and changing the optical transmission characteristics of the array of optical fibers so that they absorb, reflect and or scatter light. These and other methods that are known in the art may be used to improve the performance of the array of optical fibers by changing the way the optical energy is launched into the optical fibers.

### B. Buckle Region

In addition to the head region **302,** the flexible printed circuit board **102** also comprises a buckle region **304,** which will now be described with reference to **FIG. 3a** or **FIG. 3****b.** The buckle region **304** is that area of the flexible printed circuit board **102** connecting the head region **302** to the main body region **306** of the flexible printed circuit board **102.** The buckle region **304** is thin and composed of the same multi-layered structure as the other regions of the flexible printed circuit board **102.** A plurality of electrical circuitry may be adapted both to a first surface and a second surface of the buckle region **304.** The electrical circuitry functions to electrically connect the head region **302** to the main body region **306** of the flexible printed circuit board **102.**

The buckle region functions to absorb any stress and misalignment that may occur when the head region **302** and main body region **306** are connected to the circuit board mounting structure **104** during the assembly process. Specifically, after the head region **302** is attached to the circuit board mounting structure **104,** the flexible printed circuit board **102** is wrapped or folded around and attached to the circuit board mounting structure **104,** as explained in detail below. Alternatively, the main body region **306** may be first connected to the circuit board mounting structure **104** followed by folding the flexible printed circuit board and connecting its head region **302** to the circuit board mounting structure **104.** The housing **124** is then connected to the circuit board mounting structure **102.** The first ferrule **112,** which is adapted to and protrudes from the head region, is then aligned and housed in a longitudinal cavity **1006** of the housing **124.** However, stress or misalignment may occur when connecting the housing **124** to the circuit board mounting structure **104.**

The buckle region **304** functions to absorb any misalignment or stress that may occur during this assembly process. As shown in **FIG. 3a** or **FIG. 3b,** the buckle region **304** bends in the "Y" direction. Bending the buckle region **304** provides the buckle region **304** with bending freedom in the x, y and z direction, as well as rotational freedom. This bending freedom allows the buckle region **304** to absorb any stress that may occur during the assembly process when aligning and attaching the housing **124** to the circuit board mounting structure **104.**

### C. Main Body Region

In addition to a buckle region **304** and a head region **302,** the flexible printed circuit board **102** also comprises a main body region **306.** The main body region **306** will now be described with reference to **FIG. 3**. The main body region **306** is thin, rectangular shaped and flexible. The main body region 306 is composed of the same multi-layered structure as the other regions of the flexible printed circuit board. The main body region **306** functions to house the other electrical components and circuitry of the optical module **100.** The electrical components may serve a variety of functions, including connection of the optical module to the system to which it is located. Accordingly, a plurality of electrical components **308** and a plurality of electrical circuitry may be adapted to a first surface **324** and/or a second surface **326** of the main body region **306** of the flexible printed circuit board **102**, as shown in **FIG. 3**.

### 1. Electrical Connections

A series of electrical connections may be adapted to the first or second surface **324** of the main body region **324** of the flexible printed circuit board **102.** The electrical connections function to electrically connect the flexible printed circuit board to an external environment such as another circuit board. The electrical connections may comprise ball grid arrays, solder balls, wire leads, land-grid arrays with conductive interposers, or any other means to electrically connect the flexible printed circuit board to an external environment.

### D. Summary

In summary, the flexible printed circuit board **102** supports the main electrical components and elements of the optical module, such as the optoelectronic devices **106,** driver or amplifier chip **108** and first ferrule **112,** as well as providing bending freedom and stress relief to the optical module **100**. The flexible printed circuit board **102** is attached to, and partially enclosed by, a housing **902,** which is described below.

### II. Circuit Board Mounting Structure and Housing

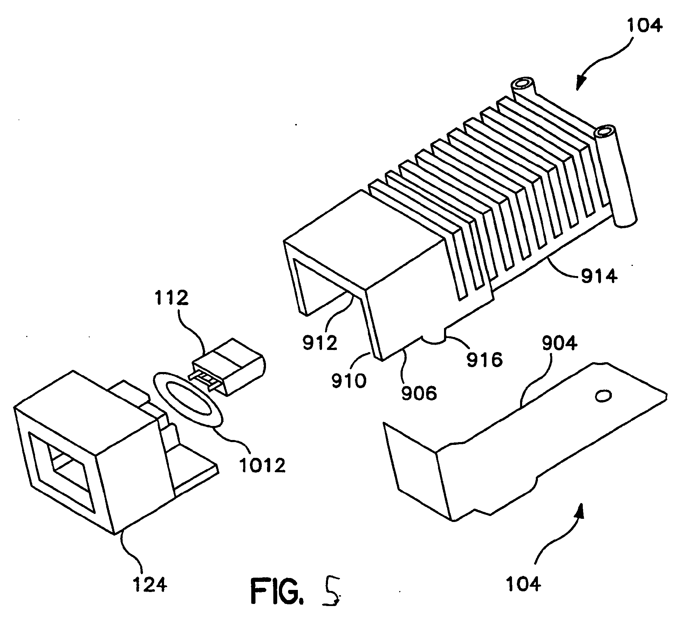

**FIG 5** is an exploded view of the flexible printed circuit board **102,** first ferrule 112, a circuit board mounting structure **104** and an housing **124.**

### A. Circuit Board Mounting Structure

The circuit board mounting structure **104** functions in **part** as a mounting structure for the flexible printed circuit board and as a heat sink to dissipate heat generated by the circuit board **102.** Specifically, the flexible printed circuit board **102** is bent and wrapped around the circuit board mounting structure **104.** A second surface **904** of the flexible printed circuit board **102** is attached to a bottom surface **914** and a first end **910** of the circuit board mounting structure **104,** as shown in **FIG 5** Alignment ridges, guide pins or guide pin holes may exist along the bottom surface **914** and first end **910** of the circuit board mounting structure, although they are not necessary. The alignment features assist in aligning and holding the flexible printed circuit **102** board to the circuit board mounting structure. A fourth adhesive is used to firmly attach the flexible printed circuit board **102** to the circuit board mounting structure **104.** The thermal expansion coefficient and compliance of the fourth adhesive advantageously assists in preventing expansion or contraction of the circuit board mounting structure from damaging the flexible printed circuit board **102.** The flexible printed circuit board **102** bends around the circuit board mounting structure **104** in such a manner that the head region **302** of the flexible printed circuit board **102** is housed inside the first end **910** of the circuit board mounting structure **104,** as shown in **FIG 5** A cavity **912** on the first end **910** of the circuit board mounting structure **104** functions to house the head region **302** of the flexible printed circuit board **102.** In another embodiment, there is no cavity **912,** as explained below. A series of heat sink ridges adapted to the circuit board mounting structure function to dissipate heat generated by the flexible printed circuit board.

The second surface **704** of the head region **302** of the flexible printed circuit board **102** is attached to the first surface **710** of the optoelectronic mounting structure **702.** The second surface **712** of the optoelectronic mounting structure **702** is attached to the upper surface **708** of the circuit board mounting structure **104** with a compliant adhesive. The flexible printed circuit board **102** then wraps around the circuit board mounting structure **104** so that the remaining portion of the second surface **904** of the flexible printed circuit board is attached to the bottom surface **914** of the circuit board mounting structure **104,** as shown in **FIG. 5**.

As shown in **FIG. 5**, the circuit board mounting structure has feet **916** for connecting the optical module **100** to an external environment such as a second circuit board **202.** The feet **916** have ridges that allow a portion of each foot **916** to drop into a hole on the second circuit board **202** and therefore attach and align the optical module **100** to the second circuit board **202.** The ridges on the feet also maintain the optical module **100** at a specified distance above the second circuit board **202.**

The circuit board mounting structure **104** has snap slots **906,** set screw holes and or alignment pin holes on the first end **910** for connecting the first end of the circuit board mounting structure to housing **124,** as discussed in detail below.

### B. Housing

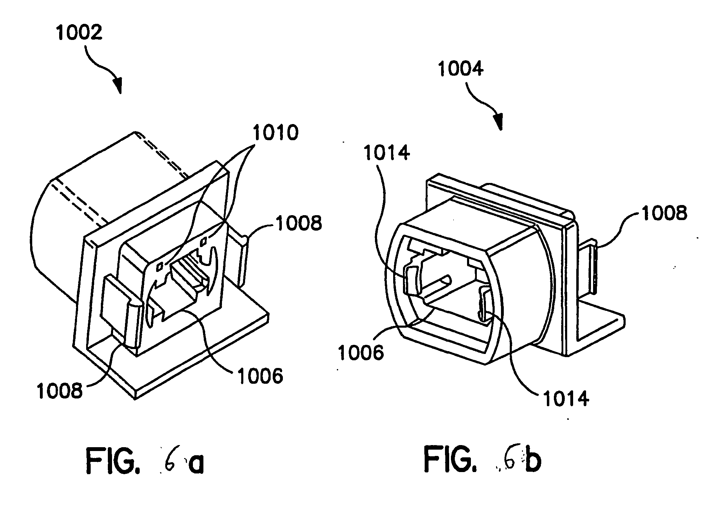

The housing **124** is connected to the circuit board mounting structure **104,** and the housing **124** will now be described in detail with reference to **FIG**. **6** The housing **124** may be made of a non-conductive material. The housing **124** comprises a mating end **1002,** as shown in **FIG. 6**, and a receiving end **1004,** as shown in **FIG. 6**. A longitudinal cavity **1006** extends through housing **124** from the mating end **1002** to the receiving end **1004,** as shown in **FIGS. 6a - 6b**.

The mating end **1002** of the housing **124** has tabs **1008** and alignment pins **1010** for connecting the mating end **1002** to the first end **910** of the circuit board mounting structure **104,** as shown in **FIG. 6a**. The position of the tabs **1008** correspond to the position of the snap slots **906** located on the first end **910** of the circuit board mounting structure **104.** Similarly, the position of the alignment pins **1010** correspond to the position of the alignment pin holes on the first end **910** of the circuit board mounting structure **104.** (See **FIG. 5**.) Thus, by simply engaging the tabs **1008** and alignment pins **1010** on the housing **124** into the snap slots **906** and alignment pin holes on the circuit board mounting structure **104,** the housing **124** snaps on to the circuit board mounting structure **104** and is firmly attached. In the above-stated embodiment, the housing is snapped onto the circuit board mounting structure. In other embodiments, the housing may be connected by using other attachment methods such as glue, screws or through the use of other mechanical fixtures. Furthermore, inserts may be adapted to the mating end of the housing that function to hold the circuit board mounting structure to the housing. The inserts aid in applying a force to the tabs that maintain the tabs firmly in place. These inserts may be in the form of wedges, spring-clips, stakes or shims.

Additionally, alignment members on the mating and receiving ends of the housing function to hold and align the position of the first and second ferrules relative to the position of the housing. These alignment members may be inwardly sloping walls at an opening of the longitudinal cavity. The alignment members act independently or in concert with the alignment pins and tabs to align and connect the first ferrule and the circuit board mounting structure.

Once the housing **124** is snapped onto the circuit board mounting structure **104,** at least one elastomeric pressure ring **1012** that is in proximity to the housing **124** functions to secure the housing **124** and the head region **302** of the flexible printed circuit board **102** to the circuit board mounting structure **104.** Specifically, the elastomeric pressure ring **1012** may be in variety of shapes and forms such as a circular, oval spaces or donuts, as shown in **FIG. 5****.** The elastomeric pressure ring **1012** has multiple purposes. First, upon connecting the housing **124** to the circuit board mounting structure **104,** the elastomeric pressure ring **1012** is compressed, and this compression creates an outward elastomeric force in the direction of the receiving end **1004** of the housing **124** that maintains the tabs **1008** and the snap slots **906** in a firmly locked position. With the compression force on the tabs **1008** and snap slots **906,** a high degree of manufacturing tolerances is achieved. Second, the pressure or force created by the compressed ring **1012** aids in bonding the optoelectronic mounting structure **702** to the circuit board mounting structure **104.** The optoelectronic mounting structure **702** is bonded to the circuit board mounting structure **104** with adhesive, and the pressure produced by the compressed ring **1012** holds the optoelectronic mounting structure **702** firmly against the circuit board mounting structure **104** while the adhesive is cured. Accordingly, the elastomeric pressure ring **1012** produces tighter bonding between the circuit board mounting structure **104** and the optoelectronic mounting structure **702.** Third, once the housing **124** is snapped onto the circuit board mounting structure **104,** the pressure or force created by the elastomeric pressure ring **1012** provides a more robust moisture seal between the housing **124** and the circuit board mounting structure **104.**

Upon attachment of the housing **124** to the circuit board mounting structure **104,** the first ferrule **112** is housed in the longitudinal cavity **1006** of the housing **124,** and alignment ridges inside the longitudinal cavity **1006** engage and hold the first ferrule **112** in place.

In the above-described embodiment as shown in **FIGS 5 - 6**, the housing **124** slides into the circuit board mounting structure **104,** and the head region **302** of the flexible printed circuit board **102** is buried in the cavity **912** of the first end **910** of the circuit board mounting structure **104.** However, in another embodiment, the first end **910** of the circuit board mounting structure **104** may not have a cavity, and the head region **302** may exist on the outside of the first end **910** of the circuit board mounting structure **104.** In this embodiment, instead of having the housing **124** slide into the circuit board mounting structure **104,** the housing **124** may slide over the circuit board mounting structure **104,** and the head region **302** may be housed in a cavity inside the housing **124.** In still another embodiment, neither the housing **124** nor the circuit board mounting structure **104** may have a cavity, and the two parts simply may mate with each other.

Finally, in another embodiment of the housing, a metallic coating may be applied to at least a portion of the mating end **1002** of the housing **124.** The metallic coating functions to provide electromagnetic shielding. In yet another embodiment, the housing may be made out of multiple materials and at least one of those materials would function to provide electromagnetic shielding.

### C. Attachment of Fiber Optic Cable

Finally, as shown in **FIG. 6b**, the receiving end **1004** of the housing **124** functions to connect the optical module **100** to an external system. The receiving end **1004** receives a second ferrule **206,** which is typically attached to one end of a fiber optic cable **204.** The second ferrule mates with the first ferrule, as described below. The second ferrule **206** may be a MT type connector, MU type connector, MPO type connector or other type connectors.

In operation, the second ferrule **206** is inserted into the receiving end **1004** of the housing **124.** Wings **1014,** snaps or beams on the receiving end **1004** align, grab and hold the second ferrule **206,** and the wings **1014** snap onto the second ferrule **206.** The wings **1014** function to provide alignment compliance when connecting the second ferrule **206** to the housing **124.** Moreover, the wings **1014** are flexible and may absorb any stress that may arise due to movement of the cable **204** that is attached to the second ferrule **206.** The wings **1014** further provide a holding force that aids in holding the second ferrule **206** to the first ferrule **112.** Alignment ridges inside the longitudinal cavity **1006** of the housing **124** further engage and hold the second ferrule **206** in place.

Once inside the longitudinal cavity **1006,** the second ferrule **206** mates with the first ferrule **112** that is also housed in the longitudinal cavity **1006** of the housing **124.** The second ferrule **206** mates with the first ferrule **112** by engaging the alignment pins **316** located on the first end **318** of the first ferrule **112** with alignment pin holes located on a mating end of the second ferrule **206.** The alignment pins **316** and alignment pin holes function to provide fine alignment between the mating arrays of optical fibers that are packaged within the mating ferrules. Alternatively, the first ferrule may have alignment holes and the second ferrule may have alignment pins, and the ferrules would accordingly mate in a similar fashion.

Once the ferrules are mated, the array of optical fibers that are packaged in the ferrules are axially aligned, and the ferrules are optically connected. For example, if the optical module **100** functions as a receiver, optical signals pass from the fiber optic cable **204,** through the optical fibers packaged in the ferrules **206** and **112** and to the optoelectronic devices **106,** which are mounted on the flexible printed circuit board **102.** The optical module **100** converts the optical signals into electrical signals and transmits these signals to an external environment, such as a printed circuit board, for processing.

### III. Alignment and Attachment Process

### A. Overview

An important aspect of an embodiment of the invention is the precise alignment and attachment of the first ferrule **112** to the array of optoelectronic devices **106** that are mounted on the flexible printed circuit board **102.** A process, according to an embodiment of the invention, for aligning and connecting the first ferrule **112** to the array of optoelectronic devices **106** comprises the following steps:
1. Holding the first ferrule **112** directly above the optoelectronic devices **106;**
2. Aligning the array of optical fibers **114** packaged in the first ferrule **112** with the array of optoelectronic devices **106** so that each optical fiber is optically aligned to a corresponding individual optoelectronic device;
3. Depositing the first adhesive **116** on a top surface of the array of optoelectronic devices **106;**
4. Placing the first ferrule **112** on top of the first adhesive **116;**
5. Tacking and curing the first adhesive **116** as to mechanically stabilize the first ferrule **112;** and
6. Forming a dam **120** around the first ferrule **112** on the flexible printed circuit board **102,** dispensing the second adhesive 122 inside the dam area, and curing the first adhesive **122.**

These precision alignment and attachment steps are discussed below.

A high-precision alignment machine may be used in combination with a series of other apparatuses to produce precise alignment and attachment of optical fibers to optoelectronic devices. These machines combine many critical technologies to perform alignment with a low-cost manufacturing environment. These technologies include: (1) a high-precision stage that is used to hold the flexible printed circuit board **102;** (2) a high-precision alignment arm for accurately placing the first ferrule **112** on the optoelectronic devices **106** that are adapted to the flexible printed circuit board **102;** (3) a top-down view camera; (4) side-view camera; (5) video monitors; (6) split-field microscope; and (7) optical video system function together to replace the labor-intensive active-alignment process. Alternatively, computers and software may perform many of above-stated technologies. An example of one of the many process that may be used with this equipment is explained in the following paragraphs.

### B. An Apparatus For Holding an Optical Element

The first step in the precise alignment and attachment of the first ferrule **112** to the array of optoelectronic devices **106** is to hold the first ferrule **112** at the end of a high-precision stage. This is accomplished through the use of an apparatus for holding an optical element, as explained in this section.

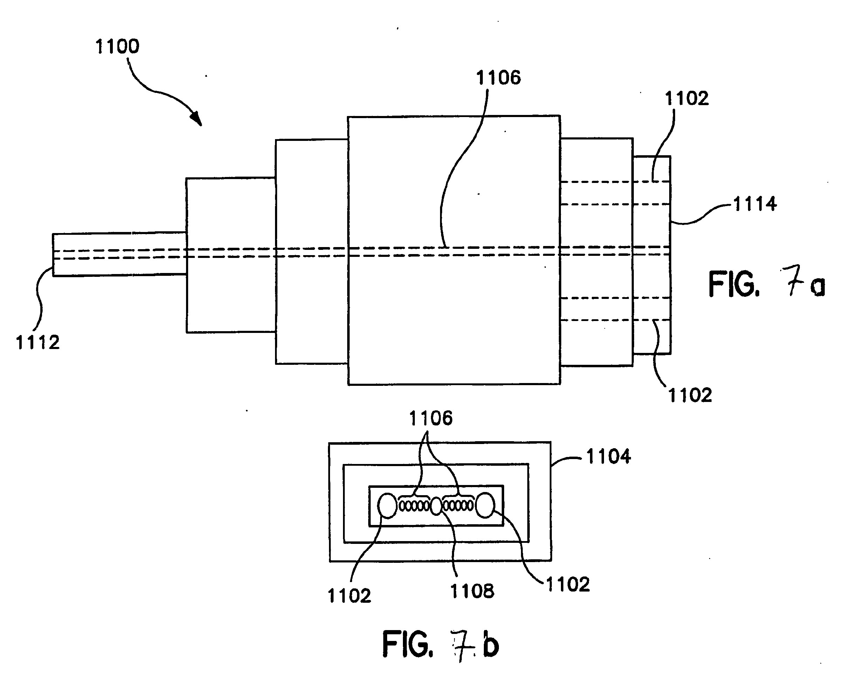

**FIGS. 7a - 7b** show views of an embodiment of the apparatus for holding an optical element. The apparatus for holding an optical element **1100** holds the first ferrule **112** through the use of pin-positioning holes **1102** and vacuum pressure. The apparatus for holding an optical element has a first end **1112** and a second end **1114.** The apparatus for holding an optical element **1100** may have two pin-positioning holes **1102** on a bottom surface **1104** of the second en 1144 receiving the alignment pins **316** of the first ferrule **112,** as shown in **FIGS. 7a - 7b**. As shown in **FIG. 7b**, an array of optical fibers **1106** may be packaged between the pin-positioning holes **1102,** and it is optically aligned with the array of optical fibers **114** that are packaged in the first ferrule **112.** The innermost optical fibers in the apparatus for holding an optical element **1100** are milled out, forming a longitudinal cavity **1108** running through the apparatus for holding an optical element **1100** from the first end **1112** to the second end **1114,** as shown **FIG. 7b**. A vacuum is placed at a top surface of the first end **1112** of the longitudinal cavity **1108,** and the longitudinal cavity **1108** functions as a vacuum slot. Accordingly, once the alignment pins **316** from the first ferrule **112** are mated with the pin-positioning holes **1102** on the apparatus for holding an optical element **1100,** the vacuum slot functions as a vacuum clamp, holding the first ferrule **112** in place. Alternatively, an electrostatic clamp. may be used in place of the vacuum clamp. Also, another embodiment may comprise alignment pins in place of the pin-positioning holes **1102,** and the alignment pins would function to connect to pin-positioning holes in a ferrule.

The apparatus for holding an optical element **1100** has multiple advantages and uses. First, it permits holding and manipulating the first ferrule **112** in both the x, y, and z direction as well as rotational directions. This aids in achieving precise alignment and attachment of the first ferrule **112** to the optoelectronic devices **106.** Also, the apparatus for holding an optical element **1100** grasps the first ferrule **112** without interfering, obscuring or damaging the optical fibers **114** in the first ferrule **112.** Additionally, the apparatus for holding an optical element **1100** allows access to the optical fibers **114** in the first ferrule **112** so that optical coupling may be achieved. For example, a light may be mounted on top of the apparatus for holding an optical element **1100** so that the optical fibers **114** emit light while being held by the apparatus for holding an optical element **1100.** The light emitted from the fibers **114** may then be used to aid in optically coupling the first ferrule **112** to the optoelectronic devices **106.** Conversely, light from the optoelectronic devices may be used to aid in optically coupling the first ferrule 1**12** to the optoelectronic devices **106.** Additionally, the apparatus for holding an optical element **1100** provides a strain-less release mechanism through the use of the vacuum clamp. By simply turning off the vacuum pressure, the apparatus for holding an optical element **1100** gently releases the first ferrule **112.**

The apparatus for holding an optical element **1100** also may be used for a variety of different purposes other than holding a ferrule. For example, it may be used to align and attach a micro-pipette array to a biological sensor array or a lens array to a MEMS modulator array. It also may be used to attach a single or array of optical fibers to a variety of different objects or devices. Moreover, the optical element may be a MT type connector, ferrule, MT-like ferrule, lenslet array, a diffractive optical element or any other type of device that may be aligned with the device. Accordingly, the apparatus for holding an optical element 1100 has multiple advantages and uses.

### C. Alignment Process - X, Y and Rotational Directions

Once the first ferrule **112** is held at the end of the high precision arm by the apparatus for holding an optical element **1100,** the next step is to align the optical fibers with the optoelectronic devices in the x, y and rotational directions. In this section, three different alignment process are described.

### 1. Image Alignment Process

The first process for aligning the optical fibers with the optoelectronic devices in the x, y and rotational directions is an image alignment process. In this embodiment of the invention, a split-field microscope is used to align the optical fibers with the optoelectronic devices by super-imposing an image of at least one optical fiber with an image of at least one optoelctronic devices. Specifically, once the first ferrule **112** is held at the end of the high precision arm by the apparatus for holding an optical element 1100, the array of optoelectronic devices, which are mounted on a flexible printed circuit board, are held on a high-precision stage. A top-down view camera may be mounted above the high-precision stage holding the optoelectronic devices. With the aid of a split-view microscope and a split-field optic video system, a top-down image of the flexible printed circuit board **102,** situated on the high precision stage, is displayed on a monitor.

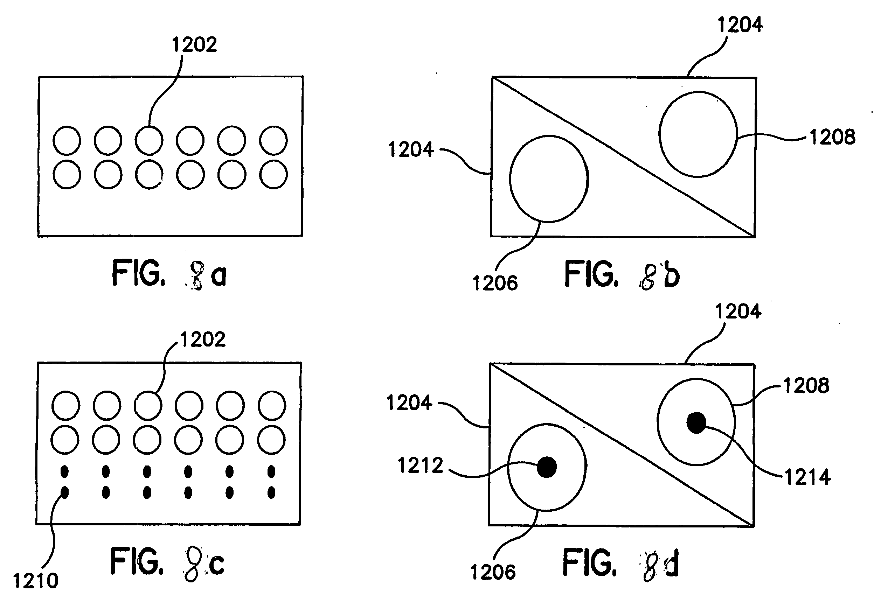

The focus and zoom on the split-field microscope and or the stage holding the flexible printed circuit board are adjusted until the optoelectronic devices **106** that are adapted to the flexible printed circuit board **102** are in view on the video monitor. The top surface of the array of optoelectronic devices **106** appears as rings **1202** on the video monitor under the high magnification of the microscopes as shown in **FlG. 8a**. A split-field video system permits simultaneous viewing of two opposite corners 1204 or ends of the array of optoelectronic devices **106** with high magnification on the video monitor. The precision stage holding the flexible printed circuit board is adjusted until the first optoelectronic device **1206** and the twelfth optoelectronic device **1208** are displayed simultaneously on the video monitor, as shown in **FIG. 8b**.

A light is mounted above the high-precision arm, emitting optical radiation down into the optical fibers **114** that are packaged in the first ferrule **112.** The light flowing down the optical fibers back-lights the fiber cores, and this provides a well-resolved image of the fiber cores under the split-field microscope. The image of the cores then appear as an array of well-resolved spots under the split field microscope, as shown in **FIG. 12c.**

Once the split-field microscope has formed an image of the fiber cores and an image of the optoelectronic devices, these two images are then superimposed by the split-field microscope to perform the alignment process. Specifically, by adjusting the x and y position of the high-precision stage, the image of the illuminated fiber cores of the first optical fiber **1212** and twelfth optical fiber **1214** are aligned within the image of the rings of the first optoelectronic device **1206** and twelfth optoelectronic device **1208** via the split-field microscope so that the spots and rings form a bull's eye pattern, as shown in **FIG. 12d.** This process precisely aligns in the x, y and rotational direction the array of optical fibers **114** that are packaged in the first ferrule **112** with the array of optoelectronic devices **106** that are adapted to the flexible printed circuit board **102.** In another embodiment, images of the optical fibers and optoelectronic devices other than the images of the first and twelfth optical fibers and optoelectronic devices may be used to achieve the same result.

### 2. Optical Energy Alignment Process

A second process to align the optical fibers with the optoelectronic devices in the x, y and rotational directions is an optical energy alignment process. In this embodiment of the invention, the flexible printed circuit board is again held by a high-precision stage. A light is mounted above the high-precision arm that holds the first ferrule, and the light emits optical radiation down into the optical fibers **114** that are packaged in the first ferrule **112.** The light flowing out of the optical fibers **114** radiates down onto the flexible printed circuit board **102,** which is positioned on the high-precision alignment stage. Under the high magnification of a microscope, this light appears as a series of illuminating spots on the optoelectronic devices **106.** Each illuminating spot corresponds to an optical fiber in the array of optical fibers **114** that are packaged in the first ferrule **112.** By adjusting the x and y position of the high-precision stage, the spots may be visually aligned with the rings to form a bull's eye pattern under the high magnification of a microscope. (This alignment process may be performed by machine vision rather than by human vision.) The alignment process precisely aligns in the x, y and rotational direction the array of optical fibers **114** that are packaged in the first ferrule **112** with the array of optoelectronic devices **106** that are adapted to the flexible printed circuit board **102.**

### 3. Precision Placement Alignment System

A third process to align the optical fibers with the optoelectronic devices in the X, Y and rotational directions is a precision placement system. In this embodiment of the invention, a precision placement system is connected to a high-precision arm that holds the first ferrule, and the system also is connected to a high-precision stage that holds the optoelectronic devices. The precision placement system aligns the objects by first calculating their initial position in space by comparing their position to a known position in space. Based upon this information, the system calculates the relative distances that the objects are apart. Once the relative distances are determined, the precision placement system aligns the objects by sequentially moving the objects and re-calculating their relative distances until they are precisely aligned.

In one embodiment of the invention, the precision placement system may determine the initial position in space of the array of optical fibers and the optoelectronic devices by holding the objects within a field of view of a microscope. Since the position of the cross-hairs on the microscope is known, the precision placement system knows the position of the optical fibers and optoelectronic devices relative to the position of the cross-hairs. Based upon this information, the precision placement system then calculates the relative position of the objects to each other. Snowing the relative distances, the precision placement sequentially and continually moves the position of the objects and recalculates their relative positions to each other until the optical fibers and optoelectronic devices are precisely aligned.

In another embodiment of the invention, the precision placement system may determine the initial position in space of the array of optical fibers and the optoelectronic devices by moving the objects to a point in space whose position is already known by the system. For example, the system may move the objects to corner mark on a jig or a precision touch sensor. Once the objects are referenced to that point in space, the precision placement system can calculate their relative positions to each other. The precision placement system then sequentially moves the position of the objects while continually re-calculating their relative positions to each other until they are precisely aligned.

### D. Alignment Process - Z Axis Direction

Once the optical fibers **114** and optoelectronic devices **106** are aligned the X, Y and rotational directions, the high-precision alignment arm is lowered until the first ferrule **112** is within a few microns from the optoelectronic devices **106.** This vertical or Z-axis alignment process is accomplished through the use of a video-image measuring system that functions in concert with the previously-described precision equipment. This z-axis alignment process is described below.

A video-image measuring system is connected between a monitor and a side-view camera that is mounted near the side of the high-precision stage. With the aid of the microscope, the side-view camera views the side of the optoelectronic devices **106** and first ferrule **112**, and this image is displayed on the monitor.

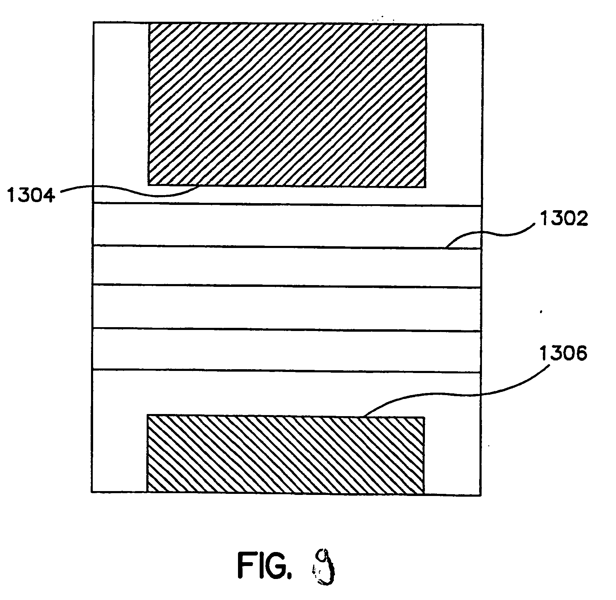

**FIG. 9** is a view of the monitor when using the video-image measuring system. The video image measurement system generates positional measuring lines **1302** over the images on the monitor, and the lines **1302** allow a user to measure the vertical distance or Z-axis height between a bottom edge **1304** of the first ferrule **112** and a top edge **1306** of the optoelectronic devices **106,** as shown in **FIG. 13.** By adjusting the z position of the high-precision arm and the high-precision stage, the distance between the bottom edge **1304** of the first ferrule **112** to the top edge **1306** of the optoelectronic devices **106** is adjusted until the objects are within a few microns (e.g., approximately 35 microns apart). Accordingly, a gap exists between the first ferrule **112** and the optoelectronic devices **106.**

In another embodiment of the process, the z-axis alignment process may be accomplished by using laser-triangulation, interference microscophy or a touch sensor.

### E. Mechanical Stabilization Process

After the first ferrule **112** and optoelectronic devices **106** are precisely positioned in space, the high-precision placement arm is raised, moving the first ferrule **112** away from the optoelectronic devices **106** in the vertical or Z-axis direction. A small volume of first adhesive **116** is then dispensed on the top surface of the optoelectronic devices **106** by a high precision, motor-driven syringe.

The high-precision placement arm is again lowered in the vertical or Z-axis direction until the first ferrule **112** contacts the optical adhesive **116,** which has been dispensed on the top surface of the optoelectronic devices **106.** The first ferrule **112** is suspended above the top surface of the optoelectronic devices in the liquid optical adhesive **116.** The first adhesive **116** may be cured using a UV light curing system.

At this point, the first ferrule **112** is attached to the optoelectronic devices **106** with the first adhesive **116** and is held from above by the apparatus for holding an optical element **1100.** As previously stated, the first adhesive mechanically stabilizes the first ferrule **112** to the optoelectronic devices **106.** The first ferrule **112** is separated from the apparatus for holding an optical element **1100** releasing the vacuum clamp on the apparatus for holding an optical element **1100** and raising the high precision alignment arm

To further mechanically stabilize the first ferrule **112** to the head region **302** of the flexible printed circuit board **102,** a dam **120** is formed on the flexible printed circuit board **102** and filled with the second adhesive **122.** A software-controlled dam and dam fill dispensing machine may be used to apply the dam **120** on the first surface **310** of the head region **302** of the flexible printed circuit board **102.** Alternatively, the dam and filling process may be done manually. The dam **120** is formed on the first surface **310** of the head region **302** of the flexible printed circuit board **102** surrounding the first ferrule **112,** driver or amplifier chip **108** and any other electrical components. The dam **120** is composed of an adhesive.

Once the dam **120** is formed on the flexible printed circuit board **102,** the automated fluid dispensing machine may be used to fill the area within the dam 120 with the second adhesive **122,** as shown in **FIG. 3**. The second adhesive **122** may be cured by placing the flexible printed circuit board **102** in an oven. After curing, the first ferrule **112** becomes further mechanically stabilized to the first surface of the head region **302** of the flexible printed circuit board **102.**

### F. Automating the Alignment Process

The entire process of precisely aligning and attaching the first ferrule **112** to the optoelectronic devices **106** and mechanically stabilizing it to the flexible printed circuit board **102** may be done manually. Alternatively, this process may be done automatically through the use of a computer generated system that functions in concert with the above-described precision equipment. Accordingly, this process is compatible with a mass-production manufacturing process that is the type of technology that is necessary to lower the cost of any commercially-available high-volume product.

### G. Other Applications

Although an embodiment of the invention has been discussed in terms of passive alignment, an embodiment of the invention allows for active alignment and attachment of the array of optical fibers to an array of optoelectronic devices. As explained earlier, this process involves manually manipulating and connecting the optical fibers to the optoelectronic devices.

## Claims

1. An optoelectronic connector comprising:
a) a printed circuit board (102) having a mounting surface supporting key electrical components (108);
b) an array of optoelectronic devices adapted to the mounting surface, the optoelectronic devices having at least a first end;
c) an array of optical elements, the array of optical elements having at least a first end;
d) the first end of the array of optical elements proximate to the first end of the array of optoelectronic devices in such a manner that one or more optical elements is optically aligned to one or more optoelectronic devices;
e) a spacer (314) adapted to the mounting surface, a first end of the spacer (314) proximate to the first end of the array of optical elements;
f) a first non-opaque adhesive (116) dispensed between the first end of the array of optoelectronic devices and the first end of the array of optical elements and dispensed on at least a portion of the spacer (314), wherein the first non-opaque adhesive contacts the first end of the array of optoelectronic devices, the first end of the array of optical elements and at least a portion of the spacer (314), and further comprising a dam (120) formed on the mounting surface surrounding the array of optoelectronic devices and the array of optical elements, the dam being filled with a second adhesive
g) said second adhesive (122) surrounding at least a portion of the array of optical elements, the second adhesive is capable of mechanically stabilizing the array of optical elements to the mounting surface and is capable of providing moisture and electrical shielding.

2. An apparatus as in claim 1, wherein the first non-opaque material comprises an UV optical adhesive.

3. An apparatus as in claim 1, wherein the first non-opaque material is capable of providing an optical path and to provide mechanical stability.

4. An apparatus as in claim 1, wherein the printed circuit board is a flexible printed circuit board.

5. An apparatus as in claim 1, wherein the optical elements are packaged in a ferrule.

6. An apparatus as in claim 5, wherein the ferrule comprises at least a first end, the first end having a recess passing along an axis of the array of optical elements.

7. An apparatus as in claim 6, wherein the ferrule comprises at least a first end, the first end having a recess that is proximate to an end of the array of optical elements.

8. An apparatus as in claim 1, further comprising a moisture barrier that surrounds the second adhesive, and
provides electrical shielding.

9. An apparatus as in claim 1, further comprising an electrical shielding that surrounds the second adhesive, and
provides moisture shielding.

10. An apparatus as in claim 1, further comprising a driver chip or amplifier chip adapted tothemounting surface, the driver chip or amplifier chip in close proximity to the array of the optoelectronic devices.

11. An apparatus as in claim 1, wherein the optical elements are optical fibers.

12. An apparatus as in claim 1, wherein the optical elements are lenses.

13. An apparatus a in claim 1, wherein the array of optical elements is a lenslet array.

14. An apparatus as in claim 1, wherein the optical elements are diffractive optical elements.

15. An apparatus as in claim 1, wherein the optical elements are filters.

## Patentansprüche

1. Ein opto-elektronischer Verbinder, der Folgendes aufweist:
a) eine gedruckte Schaltungsplatte (102) mit einer Befestigungsoberfläche, die elektrische Schlüsselkomponenten (108) trägt;
b) eine Anordnung aus opto-elektronischen Vorrichtungen, angepasst an die Befestigungsoberfläche, wobei die opto-elektronischen Vorrichtungen mindestens ein erstes Ende aufweisen;
c) eine Anordnung optischer Elemente, die mindestens ein erstes Ende aufweisen;
d) wobei das erste Ende der Anordnung optischer Elemente nahe dem ersten Ende der Anordnung opto-elektronischer Vorrichtungen in der Weise vorgesehen ist, dass eines oder mehrere optische Elemente optisch mit einer oder mehreren opto-elektronischen Vorrichtungen ausgerichtet sind;
e) ein Abstandselement (314), angepasst an die Befestigungsoberfläche, wobei ein erstes Ende des Abstandselements (314) nahe dem ersten Ende der Anordnung optischer Elemente vorgesehen ist;
f) ein erstes, nicht durchsichtiges Klebemittel (116), aufgetragen zwischen dem ersten Ende der Anordnung opto-elektronischer Vorrichtungen und dem ersten Ende der Anordnung von optischen Elementen, und zwar vorgesehen auf mindestens einem Teil des Abstandselements (314), wobei das erste nicht durchsichtige Klebemittel das erste Ende der Anordnung opto-elektronischer Vorrichtungen, das erste Ende der Anordnung von optischen Elementen und mindestens einen Teil des Abstandselements (314) kontaktiert, wobei ferner ein Damm (120) auf der Befestigungsoberfläche ausgebildet ist, und zwar die Anordnung opto-elektronischer Vorrichtungen und die Anordnung optischer Elemente umgebend, wobei der Damm mit einem zweiten Klebemittel gefüllt ist;
g) wobei das zweite Klebemittel (122) mindestens einen Teil der Anordnung optischer Elemente umgibt, und wobei das zweite Klebemittel in der Lage ist, die Anordnung optischer Elemente an der Befestigungsoberfläche zu stabilisieren und ferner in der Lage ist, eine Abschirmung von Feuchtigkeit und eine elektrische Abschirmung vorzusehen.

2. Vorrichtung nach Anspruch 1, wobei das erste nicht durchsichtige Material ein optisches UV-Klebemittel ist.

3. Vorrichtung nach Anspruch 1, wobei das erste nicht durchsichtige Material in der Lage ist, einen optischen Pfad und mechanische Stabilität vorzusehen.

4. Vorrichtung nach Anspruch 1, wobei die gedruckte Schaltungsplatte eine flexible gedruckte Schaltungsplatte ist.

5. Vorrichtung nach Anspruch 1, wobei die optischen Elemente in eine Hülse gepackt sind.

6. Vorrichtung nach Anspruch 5, wobei die Hülse mindestens ein erstes Ende aufweist, und zwar mit einer Ausnehmung hindurch laufend entlang einer Achse der Anordnung der optischen Elemente.

7. Vorrichtung nach Anspruch 6, wobei die Hülse mindestens ein erstes Ende aufweist welches eine Ausnehmung besitzt, die nahe einem Ende der Anordnung optischer Elemente vorgesehen ist.

8. Vorrichtung nach Anspruch 1, wobei ferner eine Feuchtigkeitsbarriere vorgesehen ist, die das zweite Klebemittel umgibt, und elektrische Abschirmung vorsieht.

9. Vorrichtung nach Anspruch 1, wobei ferner eine elektrische Abschirmung vorgesehen ist, die das zweite Klebemittel umgibt, und eine Feuchtigkeitsabschirmung vorsieht.

10. Vorrichtung nach Anspruch 1, wobei ferner ein Treiberchip oder ein Verstärkerchip, angepasst an die Befestigungsoberfläche, vorgesehen ist, wobei der Treiberchip oder Verstärkerchip in enger Nachbarschaft zur Anordnung der opto-elektronischen Vorrichtung vorgesehen ist.

11. Vorrichtung nach Anspruch 1, wobei die optischen Elemente optische Fasern sind.

12. Vorrichtung nach Anspruch 1, wobei die optischen Elemente Linsen sind.

13. Vorrichtung nach Anspruch 1, wobei die Anordnung optischer Elemente eine Linsenanordnung ist.

14. Vorrichtung nach Anspruch 1, wobei die optischen Elemente optische Brechungselemente sind.

15. Vorrichtung nach Anspruch 1, wobei die optischen Elemente Filter sind.

## Revendications

1. Connecteur optoélectronique comprenant :
a) une carte de circuit imprimé (102) ayant une surface de montage supportant des composants électriques clés (108) ;
b) un réseau de dispositifs optoélectroniques adaptés à la surface de montage, les dispositifs optoélectroniques ayant au moins une première extrémité,
c) un réseau d'éléments optiques, le réseau d'éléments optiques ayant au moins une première extrémité ;
d) la première extrémité du réseau d'éléments optiques étant proche de la première extrémité du réseau de dispositifs optoélectroniques de telle manière qu'un ou plusieurs élément(s) optique(s) soit/soient optiquement aligné(s) par rapport à un ou plusieurs dispositif(s) optoélectronique(s) ;
e) un élément intercalaire (314) adapté à la surface de montage, une première extrémité de l'élément intercalaire (314) étant proche de la première extrémité du réseau d'éléments optiques,
f) un premier adhésif non opaque (116) déposé entre la première extrémité du réseau de dispositifs optoélectroniques et la première extrémité du réseau d'éléments optiques et distribué sur au moins une partie de l'élément intercalaire (314), dans lequel le premier adhésif non opaque vient au contact de la première extrémité du réseau de dispositifs électriques, de la première extrémité du réseau d'éléments optiques et d'au moins une partie de l'élément intercalaire (314), et comprenant en outre un barrage (120) formé sur la surface de montage et entourant le réseau de dispositifs optoélectroniques et le réseau d'éléments optiques, le barrage étant rempli d'un second adhésif ;
g) ledit second adhésif (122) entourant au moins une partie du réseau d'éléments optiques, le second adhésif étant capable de stabiliser mécaniquement le réseau d'éléments optiques sur la surface de montage et étant capable de former un blindage contre l'humidité et électrique.

2. Appareil selon la revendication 1, dans lequel le matériau non opaque comprend un adhésif optique UV.

3. Appareil selon la revendication 1, dans lequel le premier matériau non opaque est capable d'établir un chemin optique et d'assurer la stabilité mécanique.

4. Appareil selon la revendication 1, dans lequel la carte de circuit imprimé est une carte de circuit imprimé souple.

5. Appareil selon la revendication 1, dans lequel les éléments optiques sont mis en boîtier dans une férule.

6. Appareil selon la revendication 5, dans lequel la férule comprend au moins une première extrémité, la première extrémité ayant un évidement passant le long d'un axe du réseau d'éléments optiques.

7. Appareil selon la revendication 6, dans lequel la férule comprend au moins une première extrémité, la première extrémité ayant un évidement qui est proche d'une extrémité du réseau d'éléments optiques.

8. Appareil selon la revendication 1, comprenant en outre une barrière contre l'humidité qui entoure le second adhésif, et
forme un blindage électrique.

9. Appareil selon la revendication 1, comprenant en outre un blindage électrique qui entoure le second adhésif, et forme une protection contre l'humidité.

10. Appareil selon la revendication 1, comprenant en outre une puce de circuit d'attaque ou une puce d'amplificateur adaptée à la surface de montage, la puce de circuit d'attaque ou la puce d'amplificateur étant située à proximité immédiate du réseau de dispositifs électroniques.

11. Appareil selon la revendication 1, dans lequel les éléments optiques sont des fibres optiques.

12. Appareil selon la revendication 1, dans lequel les éléments optiques sont des lentilles.

13. Appareil selon la revendication 1, dans lequel le réseau d'éléments optiques est un réseau de microlentilles.

14. Appareil selon la revendication 1, dans lequel les éléments optiques sont des éléments optiques diffractants.

15. Appareil selon la revendication 1, dans lequel les éléments optiques sont des filtres.
